# EUROPEAN PATENT APPLICATION

(11) **EP 2 559 863 A2**
(43) Date of publication of application: **20.02.2013**
(21) Application number: 12179582.7
(22) Date of filing: 07.08.2012
(51) Int. Cl.: F01D 25/00, F01D 21/00, F02C 9/16

(54) **Method and system for analysis of turbomachinery**

(30) Priority: 19.08.2011 US 201113214148
(71) Applicant: General Electric Company, Schenectady, NY 12345 (US)
(72) Inventor: Paez, Jose Leon Vega, 76030 Queretaro (MX); Sanchez, Adriana Elizabeth Trejo, 76030 Queretaro (MX); Gamboa, Monica Lizbeth Perez, 76030 Queretaro (MX); Valdovinos, Juan Paulo Chavez, 02-256 Warsaw (PL); Barco, Hugo Enrique Cruz, 76030 Queretaro (MX)
(74) Representative: Cleary, Fidelma

(57) **Abstract**

A method and a system for analyzing turbomachinery (56) are provided. In one embodiment, a system for analyzing turbomachinery is provided. The system includes an intelligent turbomachinery filter (ITF) system (54) configured to analyze a historical sensor data (44) for one or more components of a turbomachine to produce a filtered trend (60). The system further includes a detection and diagnostic system (50) configured to determine a root cause of a turbomachine performance based on the filtered trend (60).

## Description

### BACKGROUND

The invention relates generally to turbomachinery, and more particularly to a method and system for analyzing trends in turbomachinery.

Turbomachinery may include an apparatus such as a turbine, a compressor, or a pump. As the turbomachinery operates, efficiency and performance may change over time. This change in performance may be due to various factors such as wear or component damage. Discovering the root cause of this change in performance may be useful in determining, for example, what type of maintenance should be performed on the turbomachinery so as to restore the turbomachinery to its original operating efficiency. However, the determination of the root cause of turbomachinery performance may require the stopping of turbomachinery operations followed by a visual analysis of the various turbomachinery components, which is inefficient and costly.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In one aspcet, a system for analyzing turbomachinery is provided. The system includes an intelligent turbomachinery filter (ITF) system configured to analyze a historical sensor data for one or more components of a turbomachine to produce a filtered trend. The system further includes a detection and diagnostic system configured to determine a root cause of a turbomachine performance based on the filtered trend.

In a second aspect, a method for analyzing a turbomachinery is provided. The method includes receiving a sensor data relating to a turbomachine and saving the sensor data for a time period in a sensor database as a historical sensor data. The system further includes applying a pre-processing analysis to the historical sensor data and deriving a trend signal based on the pre-processing analysis. The system additionally includes applying a detection and diagnostic analysis to the trend signal to derive a diagnostic data relating to the turbomachine.

In a third aspect, the invention resides in a computer program comprising a program code means adapted to perform the above method when executed by a computer and in the computer program embodied on a computer-readable medium.

### DRAWINGS

Embodiments of the present invention will now be described, by way of example only, with reference to the accompanying drawings in which:
FIG. 1 is a block diagram of an embodiment of turbomachinery, e.g., a gas turbine system;
FIG. 2 is an information flow diagram of embodiments of a sensor database and a diagnostic and detection system suitable for analyzing turbomachinery;
FIG. 3 is an information flow diagram of an embodiment of an intelligent turbomachinery filter (ITF) and the diagnostic and detection system of FIG. 2;
FIG. 4 is an information flow diagram of an embodiment of an intelligent turbomachinery filter (ITF) and the diagnostic and detection system of FIG. 2; and
FIG. 5 is a flow chart of an embodiment of a process suitable for analyzing turbomachinery performance.

### DETAILED DESCRIPTION

One or more specific embodiments of the invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the invention, the articles "a," "an," "the," and "said" are intended to mean that there are one or more of the elements. The terms "comprising," "including," and "having" are intended to be inclusive and mean that there may be additional elements other than the listed elements.

Turbomachinery, such as a turbine engine (e.g., gas or steam turbine), a compressor, or a pump, may undergo changes or shifts in performance during operation. For example, the turbine engine may shift from operating at certain revolutions per minute (RPM) to operating at a lower or higher RPM without any changes made by an operator or controller for the turbine engine. The operational changes (e.g., changes in RPM, temperature, pressure, vibration) of the turbomachinery may be attributed to certain conditions, such as worn components, unwanted changes in fuel composition (e.g., water in the fuel), unexpected maintenance events (e.g., blade cracks), and the like. In one embodiment, the turbomachinery may include a plurality of sensors suitable for measuring parameters such as temperature, pressure, vibration, speed, flow rate, clearance (e.g., distance between two components), and the like. The sensor data may be stored, for example, in a sensor database for future analysis. However, the sensor data may include undesired measurement effects or measurement externalities, such as effects or externalities caused by schedule shifts (e.g., shifts in fuel type), ambient effects (e.g., changes in ambient temperature and pressure), vibration effects, transient effects (e.g., control transients), and so on. That is, the sensor data may have been influenced by the measurement effects or externalities, creating certain inaccuracies in the data. For example, temperature and pressure sensor readings in a turbine system may incorporate unwanted variations from "true" or correct turbine temperature and pressure readings due to changes in ambient temperatures and pressures.

In one embodiment, an intelligent turbomachinery filter (ITF) may pre-process the data stored in the sensor database and derive certain trends based on the pre-processing of the data. For example, the ITF may apply filtering techniques, as described in more detail below, useful in removing or otherwise filtering the unwanted variations, including variations due to measurement effects or externalities. Additionally, the ITF may derive a data trend, such as a time-based graph of temperature, pressure, vibration, clearance, flow rate, fuel rate, power, and speed (e.g., shaft speed). The pre-processed data may then be provided, for example, to a diagnostic system suitable for use in diagnosing a root cause of the pre-processed data. Indeed, the pre-processed data may be used to derive the root cause of the data trend, such as a cracked blade, dirty fuel, a blocked inlet, and so forth. It is to be understood that the list of root causes may be quite long (e.g., in the thousands of items), and may include any root cause of turbomachinery performance changes or performance degradations.

Additionally or alternatively to pre-processing data, the ITF may post-process data. That is, the ITF may receive data from the diagnostic system, and apply filtering techniques suitable in removing or otherwise filtering the data provided by the diagnostic system. For example, in one embodiment, the diagnostic system may transform input data into output international organization for standardization (ISO) graphs. More specifically, the input data may be used to derive ISO graphs at certain reference temperatures, pressures, clearances, vibration, flow rate, fuel rate, power, and speed, useful in diagnosing or comparing the performance of a turbomachinery against baseline ISO graphs. For example, the baseline ISO graphs may be found in a document, such as an ISO document 2314 "Gas Turbine-Acceptance Test." The ITF may filter the ISO graphs provided by the diagnostic system, and the more accurate, filtered ISO graphs may subsequently be used to compare against the baseline ISO graphs. By filtering the data before processing by the diagnostic system and/or after processing by the diagnostic system, the ITF may provide for more accurate sensor measurements and an improved diagnosis of turbomachinery performance.

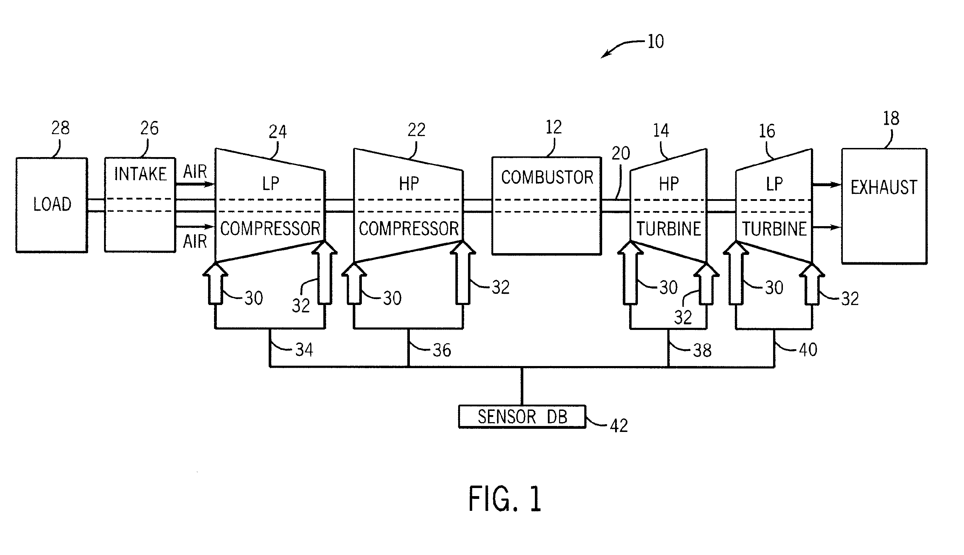

With the foregoing in mind, it may be useful to describe an embodiment of a turbomachinery incorporating techniques disclosed herein, such as a turbine system 10 illustrated in FIG. 1. As depicted, the turbine system 10 may include a combustor 12 that receives fuel and air for combustion in a chamber within combustor 12. This combustion creates hot pressurized exhaust gases. The combustor 12 directs the exhaust gases through a high pressure (HP) turbine 14 and a low pressure (LP) turbine 16 toward an exhaust outlet 18. The HP turbine 14 may be part of a HP rotor. Similarly, the LP turbine 16 may be part of a LP rotor. As the exhaust gases pass through the HP turbine 14 and the LP turbine 16, the gases force turbine blades to rotate a drive shaft 20 along an axis of the turbine system 10. As illustrated, drive shaft 20 is connected to various components of the turbine system 10, including a HP compressor 22 and a LP compressor 24.

The drive shaft 20 may include one or more shafts that may be, for example, concentrically aligned. The drive shaft 20 may include a shaft connecting the HP turbine 14 to the HP compressor 22 to form a HP rotor. The HP compressor 22 may include blades coupled to the drive shaft 20. Thus, rotation of turbine blades in the HP turbine 14 causes the shaft connecting the HP turbine 14 to the HP compressor 22 to rotate blades within the HP compressor 22. This compresses air in the HP compressor 22. Similarly, the drive shaft 20 includes a shaft connecting the LP turbine 16 to the LP compressor 24 to form a LP rotor. The LP compressor 24 includes blades coupled to the drive shaft 20. Thus, rotation of turbine blades in the LP turbine 16 causes the shaft connecting the LP turbine 16 to the LP compressor 24 to rotate blades within the LP compressor 24. The rotation of blades in the HP compressor 22 and the LP compressor 24 compresses air that is received via an air intake 26. The compressed air is fed to the combustor 12 and mixed with fuel to allow for higher efficiency combustion. Thus, the turbine system 10 may include a dual concentric shafting arrangement, wherein LP turbine 16 is drivingly connected to LP compressor 24 by a first shaft in the drive shaft 20, while the HP turbine 14 is similarly drivingly connected to the HP compressor 22 by a second shaft in the drive shaft 20 internal and concentric to the first shaft. Shaft 20 may also be connected to load 28, which may be a vehicle or a stationary load, such as an electrical generator in a power plant or a propeller on an aircraft. Load 28 may be any suitable device that is powered by the rotational output of turbine system 10.

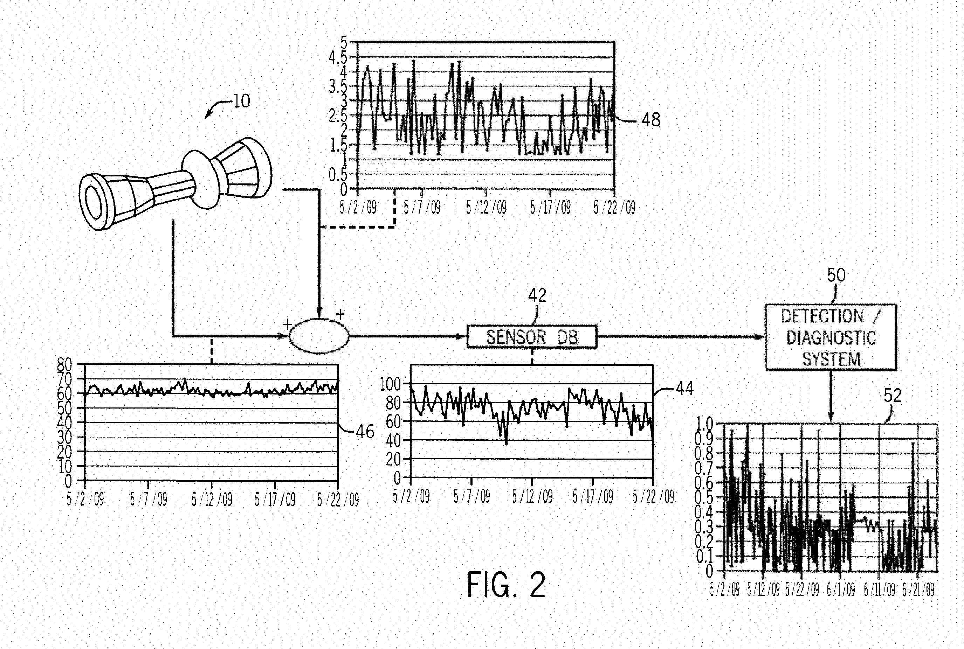

The turbine system 10 may also include a plurality of sensors, configured to monitor a plurality of engine parameters related to the operation and performance of the turbine system 10. The sensors may include, for example, inlet sensors 30 and outlet sensors 32 positioned adjacent to, for example, the inlet and outlet portions of the HP turbine 14, the LP turbine 16, the HP compressor 22, and/or the LP compressor 24, respectively. The inlet sensors 30 and outlet sensors 32 may measure, for example, environmental conditions, such as ambient temperature and ambient pressure, as well as a plurality of engine parameters related to the operation and performance of the turbine system 10, such as, exhaust gas temperature, rotor speed, engine temperature, engine pressure, gas temperature, engine fuel flow, exhaust flow, vibration, clearance between rotating and stationary components, compressor discharge pressure, pollution (e.g., particulate count), and turbine exhaust pressure. Further, the sensors 30 and 32 may also measure actuator information such as valve position, and a geometry position of variable geometry components (e.g., air inlet). The plurality of sensors 30 and 32 may also be configured to monitor engine parameters related to various operational phases of the turbine system 10. Measurements taken by the plurality of sensors 30 and 32 may be transmitted via module lines 34, 36, 38, and 40, which may be communicatively coupled to a sensor database (DB) 42. For example, module line 34 may be utilized to transmit measurements from the LP compressor 24, while module line 36 may be utilized to transmit measurements from the HP compressor 22. In a similar manner, module line 38 may be utilized to transmit measurements from the HP turbine 14, while module line 40 may be utilized to transmit measurements from the LP turbine 16. Thus, module lines 34, 36, 38, and 40 may transmit measurements from separate modules of the turbine system 10 to the sensor DB 42. However, the data in the sensor DB 42 may include certain variations from the "true" or correct measurements, as described in more detail below with respect to FIG. 2. FIG. 2 is an information flow diagram depicting an embodiment of the turbine system 10 of FIG. 1 having stored sensor data 44 included in the sensor DB 42. In the illustrated embodiment, the stored sensor data 44 may include a combination of "true" or correct data 46 and variation data 48. That is, variations 48 due to measurement effects such as changes in ambient temperature, changes in ambient pressure, scheduled shifts (e.g., fuel changeover from syngas to diesel), control transients (e.g., adjustments issued by a process controller system) or more generally, measurement errors, may combine with the "true" data 46 during sensor measurement activities and may be subsequently saved in the database 42 as stored sensor data 44. Accordingly, the stored sensor data 44 may have a higher signal-to-noise ratio (SNR) than desired. For example, if the turbine system 10 is located in a warmer climate area, such as sections of the southern United States, or tropical regions of the world, temperature measurements gathered from the turbine system 10 may be higher than temperature measurements gathered from colder areas in the world. Likewise, temperature measurements gathered during a particularly hot day may differ from temperature measurements gathered during colder days. Such variations 48 from the "true" values 46 are likely due to ambient effects rather than to performance effects.

Similar variations 48 may be introduced by ambient pressures and/or altitudes. For example, high pressure weather systems or lower altitude locations may result in higher pressure measurements for the turbine system 10. Conversely, low pressure weather systems and higher local altitudes may result in lower pressure measurements for the turbine system 10. Scheduled shifts may also cause variations 48. For example, the turbine system 10 may be scheduled to switch fuel types from using syngas as a first fuel to using diesel as a second fuel, or vice versa. Control transients may also cause the variations 48. In one example, a controller may issue control actions that activate certain actuators (e.g., valves, switches, motors). Transients (e.g., transitory measurements) may develop when the controller changes from one steady-state condition to another condition. Such transients may also result in the variations 48. As depicted, when the "true" data 46 combines with the variations 48, the resulting stored sensor data 44 may have a higher SNR than desired.

The stored sensor data 44 may include sensor data retrieved approximately every 50 to 500 milliseconds, 50 milliseconds to 5 seconds, 1 second to 1 minute, or 1 second to 1 hour. The stored sensor data 44 may include historical data. That is, the stored sensor data 44 may be captured over a period of time, such as a period of time of between 1 hour and 1 day, 1 hour and 1 week, 1 week and 1 month, 1 week and 5 years. By processing historical data 44 instead of real-time data, the systems and methods disclosed herein may more accurately detect changes in the turbine system 10 performance and diagnose one or more root causes of the detected changes.

For example, a detection and diagnostic system 50 may be used to process the stored sensor data 44. The detection and diagnostic system 50 may use statistical models, physics-based model, or a combination thereof, to detect changes in the turbine system 10, such as decreases in power output, changes in flows of the exhaust 18, changes in the combustor 12 firing, performance changes in the turbines 14, 16, and compressors 22, 24, and variations associated with the load 28. Indeed, all components of the turbine system 10 may be analyzed by the detection and diagnostic system 50 to detect and derive root causes of changes in the performance of the components. For example, physics-based models, statistical models, and or knowledge-based models (e.g., expert systems, fuzzy logic models) suitable for simulating and predicting the thermal behavior, mechanical behavior, and more generally, useful in simulating the behaviors of the turbine system 10 its components may be used. The physics-based models may include models such as a low cycle fatigue (LCF) life prediction model, a computational fluid dynamics (CFD) model, a finite element analysis (FEA) model, a parametric solid model, a non-parametric solid model, a 3-dimension to 2-dimension FEA mapping model, or a combination thereof. The statistical models may include models such as a regression analysis model, a data mining model, or a combination thereof.

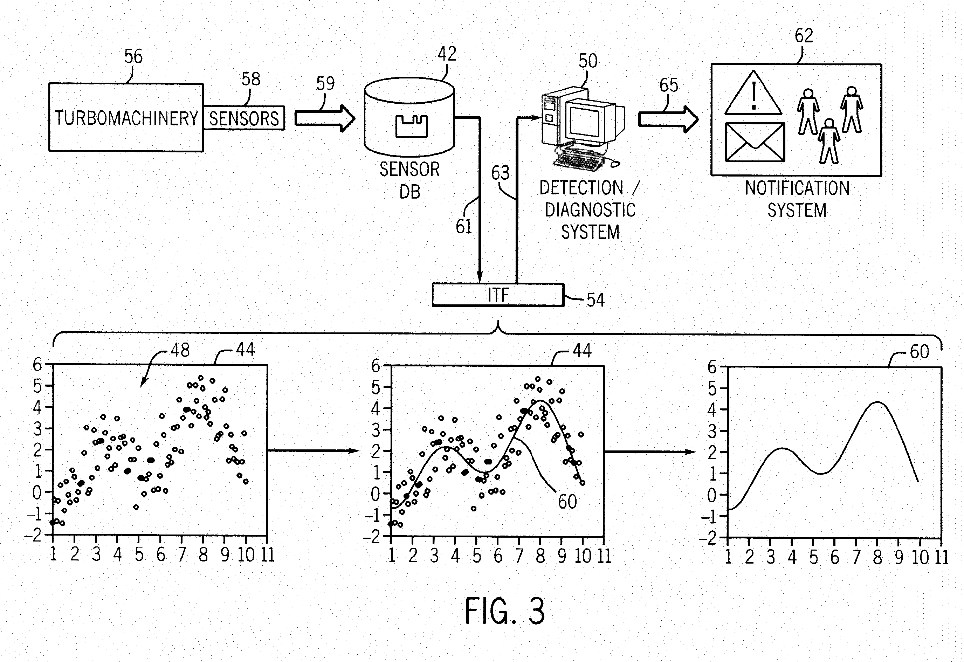

In one example, the detection and diagnostic system 50 may output a diagnostic data 52, such as a derived ISO graph having ISO reference values. Indeed, the diagnostic data 52 may include derived ISO graphs, such as an ISO temperature graph, an ISO pressure graph, and ISO vibration graph, an ISO clearance graph, and/or an ISO flow measurement graph (e.g., flow rate), derived by the system 50. Each ISO graph may include standard reference conditions for temperature, pressure, vibration, clearances, and/or flow. For example, the derived ISO graphs may be used to compare the performance of the turbine system 10 against baseline ISO performance graphs provided by a manufacturer of turbomachinery. The comparison between the derived ISO graphs and the baseline ISO performance graphs may be useful in detecting undesired changes in the performance of the turbine system 10, and may also be used in deriving the root causes of the changes in performance. However, the variations 48 incorporated in the stored sensor data 44 may affect the diagnostic data 52, causing inaccuracies in the diagnostic data 52. These inaccuracies may affect the analysis performed by the detection and diagnostic system 50, which in turn may lead to incorrect root cause determinations. Accordingly, the systems and methods described herein may enable a removal or filtering of the variations 48. For example, an intelligent turbomachinery filter (ITF) may be used to minimize or eliminate the variations 48, from the stored sensor data 44 and/or the diagnostic data 52, as described in more detail below with respect to FIGS. 3, 4 and 5.

FIG. 3 is an information flow diagram depicting an embodiment of an TTF 54 that may pre-process data, such as the stored sensor data 44, to filter unwanted variations, such as the variations 48 shown in FIG. 2. The ITF 54 may include non-transitory machine readable media storing code or computer instructions that may be used by a computing device to implement the techniques disclosed herein. In the depicted embodiment, a turbomachinery 56 may include a multitude of sensors 58. The turbomachinery 56 may be, for example, a turbine (e.g., a gas or steam turbine), a pump, or a compressor suitable for transferring energy between a rotor and a fluid. The turbomachinery 56 may be, for example, the turbine system 10 described in more detail above with respect to FIG. 1. Alternatively, the turbomachinery 56 may be a steam turbine, a hydroturbine, or a wind turbine.

In certain embodiments, the sensors 58 may include temperature sensors, pressure sensors, fluid level sensors, vibration sensors, fluid flow sensors, pollutant emission sensors, and/or clearance sensors (e.g., measuring spacing between rotating and stationary components). In the depicted embodiment, the measurements from the sensors 58 may be logged or stored in the sensor DB 42. That is, sensor 58 readings may be transmitted (arrow 59) into the sensor DB 42. The sensor DB 42 may be a relational database, a file, a distributed database, or any database suitable for storing and retrieving information. In certain embodiments, the measurements may be sampled and transmitted (arrow 59) at a certain sample rate, such as approximately every 50 to 500 milliseconds, 50 milliseconds to 5 seconds, 1 second to 1 minute, or 1 second to 1 hour. The sampled data may be captured over a period of time, such as a period of time of approximately 1 hour, 1 day, 1 week, 1 month, 1 year, 5 years, and saved in the sensor DB 42 as stored sensor data 44.

In the depicted embodiment, the ITF 54 may pre-process the stored sensor data 44 upstream of the detection and diagnostic system 50. More specifically, the ITF 54 may retrieve the stored sensor data 44 (arrow 61) and apply several mathematical and/or knowledge-based techniques, as described in more detail below, to reduce or otherwise remove the variations 48 (shown in FIG. 2) from the stored sensor data 44 before the stored sensor data 44 is analyzed by the detection and diagnostic system 50. The pre-processed data may then be provided (arrow 63) to the detection and diagnostic system 50. In one example, a Wiener filter may be applied to the stored sensor data 44. The Wiener filter enables a reduction in the amount of "noise" present in a signal, such as a signal included in the sensor data 44, by comparing the signal with an estimation of the desired noiseless signal. The "noise" that may have degraded the signal may then be removed. In this embodiment, a desired noiseless signal may be, for example, baseline ISO temperature, pressure, vibration, clearance, and/or flow rates curves provided by a manufacturer of the turbomachinery 56.

Additionally or alternatively, a kernel smoother may be used to reduce or remove the unwanted variations 48. The kernel smoother may use statistical methods for estimating a real valued function by using the function's "noisy" observations when no parametric model for the real valued function is known. This particular technique is very useful in stored sensor data 44 having two dimensions. Further, a Savitzky-Golay method may also be used to reduce or remove the unwanted variations 48. The Savitzky-Golay method may perform a k-degree polynomial regression on a series of values of at least k + 1 points, each point treated as being equally spaced in a series with the other points. The regression derives a smoothed value for each point. In another example, a Douglas-Peucker method may be used by the ITF 54 to filter the stored sensor data 44. The Douglas-Peucker method may use a known signal to find a similar simplified signal having fewer data points. The method defines the term "dissimilar" based on a maximum distance between the known signal and the simplified signal.

K-means clustering techniques may also be used to reduce or eliminate the variations 48. In K-means clustering, n observations may be partitioned into k clusters so that each observation belongs to the cluster having the nearest mean. The K-means clustering techniques then attempt to find a center of natural clusters in the data, iteratively refining the clustering approach. The iterations may then reduce or eliminate "noise" in the data. In another example, locally weighted scatterplot smoothing (LOESS) may combine classical filtering and regression (e.g., linear regression) with non-linear regression to filter the stored sensor data 44. LOESS may fit simple models to localized subsets of the stored sensor data 44 to build up a function that mathematically describes the deterministic component of the variations 48, data point by data point. A smooth signal or curve may then be plotted. A regression splines method may also be used by the ITF 54 to filter the stored sensor data 44. This method uses a set of spline basis functions having a reduced set of knowns. Data is then fitted to the set of spline basis functions, using, for example, least squares fitting.

Other filtering methods may be used by the ITF 54. For example, an alpha-beta filter and/or a low-pass filter may be used. The alpha-beta filter is closely related to a Kalman filter, and uses a simplified form of an observer (e.g., linear state observer) to perform estimation, data smoothing, and control applications. Advantageously, the alpha-beta filter may not require a detailed model of the turbomachinery 56 under observation. The low-pass filter (e.g., treble cut filter) may "pass" or otherwise allow low-frequency signals, such as steady state signals, but attenuate signals with frequencies higher than a desired cutoff frequency. The higher frequencies may be "noise." In this manner, the "noise" may be reduced or eliminated.

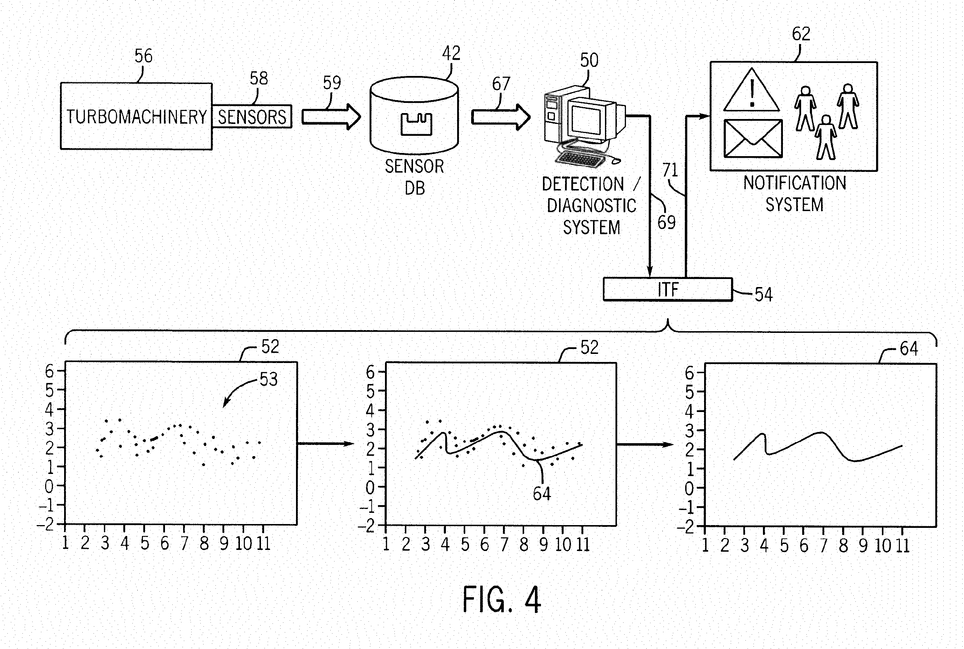

It is to be noted that all of the techniques describe above (e.g., Wiener filter, kernel smoother, Savitzky-Golay method, Douglas-Peucker method, K-means clustering, LOESS, regression splines method, alpha-beta filter, and low-pass filter) may be used alone or in combination. For example, the ITF 54 may use the aforementioned techniques to derive a trend signal or trend curve 60 that approximates the "true" or correct data 46 shown in FIG. 2. The trend curve 60 may then be provided (arrow 63) to the detection and diagnostic system 50. By using the trend curve 60 instead of the stored sensor data 44, the detection and diagnostic system 50 may more precisely detect changes in performance of the turbomachinery 56, and may derive more accurate estimations of the root cause of the changes in performance. The output of the detection and diagnostic system 50 may then be provided (arrow 65) to a trend notification system 62, to notify users (e.g., plant operators, control engineers), of any issues found by the detection and diagnostic system 50. Additionally, or alternatively, the ITF 54 may post-process data provided by the detection and diagnostic system 50, as described in more detail below with respect to FIG. 4.

FIG. 4 is an information flow diagram depicting an embodiment of the ITF 54 that may post-process data, such as the diagnostic data 52, to reduce SNR and more generally, to filter unwanted variations 53. Because the figure contains like elements found in FIG. 3, these elements are denoted using like reference numbers. As mentioned above, certain effects, such as effects or externalities caused by schedule shifts (e.g., shifts in fuel type), ambient effects (e.g., changes in ambient temperature and pressure), vibration effects, and transient effects (e.g., control transients) may result in the detection and diagnostic system 50 deriving the diagnostic data 52 having an undesired SNR. The ITF 54 may enable a reduction of the SNR in the diagnostic data 52, thus providing a more accurate, filtered diagnostic data 64.

In the depicted embodiment, the detection and diagnostic system 50 may receive (arrow 67) data, such as stored sensor data 44, from the sensor DB 42 without any pre-processing being performed by the ITF 54. It is to be understood that in other embodiments, the ITF 54 may both pre-process data and post-process data. In the embodiment illustrated in FIG. 4, the ITF 54 may receive (arrow 69) diagnostic data 52 from the detection and diagnostic system 50. The ITF 54 may then post-process the diagnostic data 52 using techniques such as the Wiener filter, the kernel smoother, the Savitzky-Golay method, the Douglas-Peucker method, the K-means clustering, LOESS, the regression splines method, the alpha-beta filter, and/or the low-pass filter, as described above with respect to FIG. 3, to remove unwanted variations 53 from the diagnostic data 52. Indeed, the ITF 54 may re-use the same or similar techniques suitable for filtering the stored sensor data 44 to reduce or otherwise remove "noise" from the diagnostic data 52. By applying the aforementioned techniques to the diagnostic data 52, the ITF 54 may derive the filtered diagnostic data 64.

The filtered diagnostic data 64 may be more accurate and may have a smaller SNR when compared to the diagnostic data 52. In this manner, the ITF 54 may pre-process data, post-process data, or a combination thereof, to provide for a more accurate performance analysis of the turbomachinery 56. Likewise, root cause determinations of issues in the turbomachinery 56 may be more precisely derived. The ITF 54 may then provide (arrow 71) the filtered diagnostic data 64 to the notification system 62 for distribution to interested entities (e.g., control engineer, turbomachinery manufacturer).

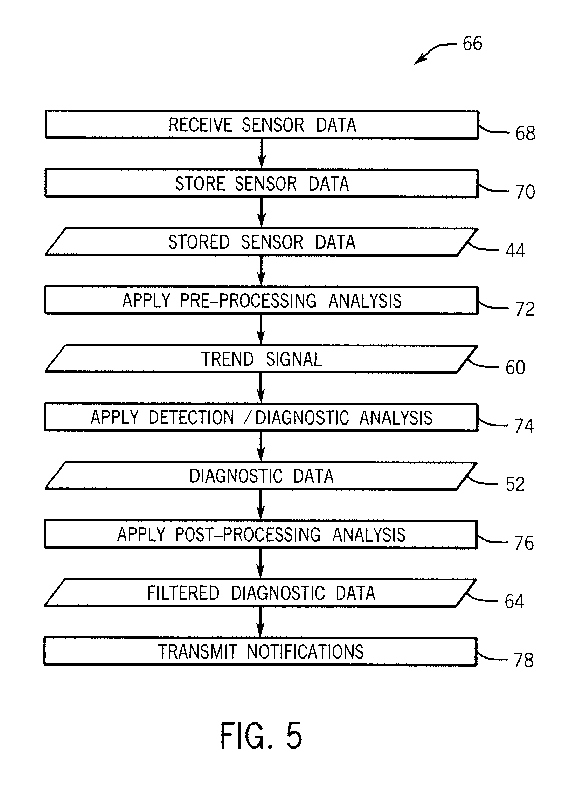

FIG. 5 is a flow chart illustrating an embodiment of a process 66 that may be used by for pre-processing stored sensor data 44, post-processing output diagnostic data 52, or a combination thereof. By pre-processing and/or post-processing the data 44 and 52, the process 66 may enable an improved detection of performance changes in the turbomachinery 56 and an increase in the accuracy of the determination of root causes for the performance changes. The process 66 may be implemented as executable code instructions stored on a non-transitory tangible computer-readable medium. The process 66 may additionally or alternatively be implemented as a method performed by a processor, a computer (e.g., workstation, laptop, tablet), and/or computing device (e.g., cell phone).

In the depicted embodiment, the process 66 may receive sensor data (block 68). For example, the sensors 58 shown in FIGS. 1 and 2 may monitor temperature pressure, fluid levels, vibration, fluid flow, pollution and/or clearance (e.g., spacing between rotating and stationary components). The process 66 may then store the sensor data (block 70). For example, the sensor DB 42 may be used as a repository for the stored sensor data 44. As mentioned above, the stored data 44 may include unwanted variations 48, such as variations 48 caused by schedule shifts (e.g., shifts in fuel type), ambient effects (e.g., changes in ambient temperature and pressure), vibration effects, and/or transient effects (e.g., control transients). Accordingly, the process 66 may apply a pre-processing analysis (block 72) suitable for reducing or eliminating the variations 48 from the stored sensor data 44.

In one embodiment, the process 66 may apply the pre-processing analysis (block 72) by using the ITF 54 to filter or otherwise remove the variations 48. As mentioned above with respect to FIGS. 3 and 4, the ITF 54 may apply techniques such as the Wiener filter, the kernel smoother, the Savitzky-Golay method, the Douglas-Peucker method, the K-means clustering, LOESS, the regression splines method, the alpha-beta filter, and/or the low-pass filter to the stored data 44 having the variations 48. The aforementioned techniques may remove or reduce the variations 48 from the stored data 44 to produce the trend signal 60 having a lower SNR than the stored data 44. Indeed, the aforementioned techniques may produce the trend signal 60 having approximately similar values to the "true" or correct data 46. By providing for the trend signal 60, the process 66 may advantageously improve the detection of performance changes in the turbomachinery 56 and the determination of the root causes of the changes.

For example, the process 66 may apply a detection and/or diagnostic analysis (block 74) to the trend signal 60 derived by the pre-processing analysis (block 72). In one embodiment, the process 66 may use the detection and diagnostic system 50 to provide the detection and/or trend analysis (block 74). More specifically, the trend signal 60 may be used as input into the detection and diagnostic system 50, and the detection and diagnostic system 50 may then analyze the trend signal 60. As mentioned above, the detection and diagnostic system 50 may apply statistical models, physics-based model, or a combination thereof, to the trend signal 60 to detect changes in the performance of the turbomachinery 56 and/or to derive the root causes of performance changes.

The detection and/or diagnostic analysis (block 74) performed by the detection and diagnostic system 50 may output diagnostic data 52, such as ISO curves derived from the stored sensor data 44. However, the diagnostic data 52 may still include variations 48, resulting in an unwanted SNR. Accordingly, the process 66 may apply a post-processing analysis (block 76) to the diagnostic data 52 to reduce or eliminate the variations 48. In one embodiment, the techniques used to pre-process the stored sensor data 44 (block 72) may also be used to post-process the diagnostic data 52. Indeed, the Wiener filter, the kernel smoother, the Savitzky-Golay method, the Douglas-Peucker method, the K-means clustering, LOESS, the regression splines method, the alpha-beta filter, and/or the low-pass filter may be applied to the diagnostic data 52. The output of the post-processing analysis may include the filtered diagnostic data 64 having less SNR than the diagnostic data 52. The filtered diagnostic data 64 may include notifications that may then be transmitted (block 78) to interested parties. By pre-processing and/or post-processing the data 44, 52, the systems and methods described herein may enable a more accurate detection of changes in performance changes of the turbomachinery 56, and may provide for a more precise list of root causes of the changes.

Certain embodiments of the invention are described above with reference to block and flow diagrams of systems, methods, apparatuses, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general-purpose computer, a special-purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer-usable medium having a computer-readable program code or program instructions embodied therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

Technical effects of the invention include the reduction or elimination of variations in stored sensor data. Further technical effects include the reduction or elimination of variations in diagnostic data. In one embodiment, the intelligent turbomachinery filter (ITF), may be used to pre-process the stored sensor data to reduce the data's signal-to-noise ratio (SNR). The ITF may apply techniques, including the Wiener filter, the kernel smoother, the Savitzky-Golay method, the Douglas-Peucker method, the K-means clustering, LOESS, the regression splines method, the alpha-beta filter, and/or the low-pass filter. These techniques may efficiently reduce or eliminate the variations in the stored data, thus reducing the SNR. The pre-processed stored sensor data may then be provided to the detection and diagnostic system.

The detection and diagnostic system may more optimally detect changes in turbomachinery performance and the root causes for the changes in performance by analyzing the pre-processed stored sensor data. The detection and diagnostic system may then output diagnostic data, such as ISO curve data. In one embodiment, the ITF may post-process the diagnostic data by applying the Wiener filter, the kernel smoother, the Savitzky-Golay method, the Douglas-Peucker method, the K-means clustering, LOESS, the regression splines method, the alpha-beta filter, and/or the low-pass filter to the diagnostic data. The post-processing may reduce or eliminate variations in the diagnostic data, resulting in a more accurate diagnosis of turbomachinery performance changes and root causes of the performance changes.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system for analyzing turbomachinery, comprising:
an intelligent turbomachinery filter (ITF) system (54) configured to analyze a historical sensor data (44) for one or more components of a turbomachine (56) to produce a filtered trend (60, 64); and
a detection and diagnostic system (50) configured to determine a root cause of a turbomachine performance based on the filtered trend (60, 64).

2. The system of claim 1, wherein the historical sensor data (44) comprises data stored over a period of at least approximately 1 hour, 1 day, 1 month, 1 year, 5 years, or 10 years.

3. The system of claim 1 or 2, wherein the detection and diagnostic system (50) is configured to derive a diagnostic data (52), and the ITF system is configured to analyze the diagnostic data (52) to derive a filtered diagnostic data (64).

4. The system of claim 3, wherein the diagnostic data (52) comprises an international organization for standardization (ISO) temperature graph, an ISO pressure graph, an ISO vibration graph, an ISO clearance graph, an ISO flow measurement graph, or a combination thereof.

5. The system of any of claims 1 to 4, wherein the ITF system (54) is configured to apply a Wiener filter, a kernel smoother, a Savitzky-Golay method, a Douglas-Peucker method, a K-means clustering, a locally weighted scatterplot smoothing (LOESS), a regression splines method, an alpha-beta filter, a low-pass filter, or a combination thereof, to the historical sensor data (44) for the one or more components of the turbomachinery (56) to produce the filtered trend (60, 64).

6. The system of claim 3 or 4, wherein the ITF system (54) is configured to apply a Wiener filter, a kernel smoother, a Savitzky-Golay method, a Douglas-Peucker method, a K-means clustering, a locally weighted scatterplot smoothing (LOESS), a regression splines method, an alpha-beta filter, a low-pass filter, or a combination thereof, to the diagnostic data (52) to derive the filtered diagnostic data (64).

7. The system of any preceding claim, wherein the detection and diagnostic system (50) comprises a physics-based model, a statistical model, or a combination thereof, configured to detect a change in the turbomachine performance based on the filtered trend (60), and wherein the detection and diagnostic system (50) is configured to derive the root cause based on the change in the turbomachine performance.

8. The system of any preceding claim, wherein the historical sensor data (44) comprise at least one of a temperature, a vibration, a speed, a flow, a pressure, a fuel measure, a pollution measure, a clearance measure, or an actuator position.

9. A method (66) for analyzing turbomachinery comprising:
receiving (68) a sensor data relating to a turbomachine;
saving (70) the sensor data for a time period in a sensor database (42) as a historical sensor data (44);
applying (72) a pre-processing analysis to the historical sensor data (44);
deriving a trend signal (60) based on the pre-processing analysis; and
applying (74) a detection and diagnostic analysis to the trend signal (60) to derive a diagnostic data (52) relating to the turbomachine.

10. The method of claim 9, wherein saving (70) the sensor data in the sensor database for the time period comprises saving at least approximately 1 hour, 1 day, 1 month, 1 year, 5 years, or 10 years of the sensor data.

11. The method of claim 9 or 10, wherein applying (72) the pre-processing analysis to the historical sensor data (44) comprises applying a Wiener filter, a kernel smoother, a Savitzky-Golay method, a Douglas-Peucker method, a K-means clustering, a locally weighted scatterplot smoothing (LOESS), a regression splines method, an alpha-beta filter, a low-pass filter, or a combination thereof.

12. The method of any of claims 9 to 11, comprising applying (76) a post-processing analysis to the diagnostic data (52) to derive a filtered diagnostic data (64).

13. The method of claim 12, wherein applying (76) the post-processing analysis to the diagnostic data comprises applying a Wiener filter, a kernel smoother, a Savitzky-Golay method, a Douglas-Peucker method, a K-means clustering, a locally weighted scatterplot smoothing (LOESS), a regression splines method, an alpha-beta filter, a low-pass filter, or a combination thereof.

14. A computer program comprising computer program code means adapted to perform the method of any of claims 9 to 13 when executed by a computer.

15. The computer program of claim 14 embodied on a computer-readable medium.
